# EUROPÄISCHE PATENTSCHRIFT

(11) **EP 3 898 301 B1**
(45) Veröffentlichungstag und Bekanntmachung des Hinweises auf die Patenterteilung: **22.11.2023**
(21) Anmeldenummer: 19829060.3
(22) Anmeldetag: 13.12.2019
(51) Int. Cl.: B60H 1/24, B60H 1/34, B60K 37/02

(54) **INNENRAUMEINRICHTUNG FÜR EIN KRAFTFAHRZEUG**
INTERIOR DEVICE FOR A MOTOR VEHICLE
ÉQUIPEMENT D'HABITACLE POUR UN VÉHICULE À MOTEUR

(30) Priorität: 21.12.2018 DE 102018222700
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: BOUGHANMI, Nesrine, 38440 Wolfsburg (DE); WILSDORF, Simone, 38442 Wolfsburg (DE)
(86) Internationale Anmeldenummer: PCT/EP2019/085111
(87) Internationale Veröffentlichungsnummer: WO 2020/126919

(56) Entgegenhaltungen:
- EP-A2- 1 288 033
- DE-A1- 10 152 480
- DE-A1-102011 000 924
- DE-A1-102015 115 530
- DE-U- 1 909 519
- JP-A- S58 174 049
- US-A1- 2014 263 511

## Beschreibung

Die Erfindung betrifft eine Innenraumeinrichtung für ein Kraftfahrzeug, mit einem einer Windschutzscheibe zuordenbaren Armaturenbrett, an welchem zumindest eine Instrumententafel angeordnet ist, und mit einer Ausströmeranordnung, die wenigstens einen ersten Ausströmer, der an einer der Windschutzscheibe zuordenbaren Oberseite des Armaturenbretts angeordnet ist, umfasst, wobei die Instrumententafel an dem Armaturenbrett verstellbar gelagert ist, wobei die Instrumententafel an dem Armaturenbrett in Längsrichtung des Armaturenbretts verschiebbar gelagert ist.

Weiterhin betrifft die Erfindung ein Kraftfahrzeug mit einer Innenraumeinrichtung, die wie obenstehend beschrieben ausgebildet ist.

Innenraumeinrichtungen der eingangs genannten Art sind aus dem Stand der Technik bereits bekannt. So offenbart die Offenlegungsschrift US 2014/263511 A1 eine verschiebbare Instrumententafelvorrichtung zur Befestigung einer Instrumententafel in einem Wohnwagen, welche eine einfache Neupositionierung der Instrumententafel entlang einer horizontalen Achse zwischen einer Fahrerseite und einer Beifahrerseite entlang eines Armaturenbretts ermöglicht.

Die Offenlegungsschrift DE 10 2015 115 530 A1 offenbart ein Belüftungssystem für einen Fahrgastinnenraum eines Kraftfahrzeugs, das mehrere Ausströmer umfasst. Dabei sind an einer der Windschutzscheibe zugeordneten Oberseite eines Armaturenbretts mehrere Ausströmer angeordnet, die verstellbare Luftleitelemente aufweisen, die von einem Benutzer mechanisch bedienbar sind, um die Ausströmrichtung zu beeinflussen. Weiterhin sind Ausströmer an einer Vorderseite des Armaturenbretts angeordnet, die dem Fahrzeuginnenraum und damit den Insassen des Fahrzeugs zugeordnet sind. Auch diese Ausströmer weisen verstellbare Luftleitelemente auf, die von einem Benutzer zum Anpassen der Luftströmungsrichtung mechanisch verstellbar sind.

Aus der Offenlegungsschrift DE 11 2015 005 722 T5 ist eine weitere Innenraumeinrichtung mit einer Ausströmeranordnung bekannt, bei welcher sowohl an der Oberseite als auch an der Frontseite des Armaturenbretts Ausströmer mit verstellbaren Luftleitelementen angeordnet sind. Die DE 10 2009 048 998 A1 zeigt eine Luftausströmvorrichtung für einen Innenraum eines Kraftfahrzeugs, die zumindest einen ersten Luftausströmmodus und zumindest einen zweiten Luftausströmmodus aufweist.

Eine Defrostervorrichtung für ein Belüftungssystem eines Fahrzeugs zum Leiten eines Luftstroms auf eine Frontscheibe des Fahrzeugs, aufweisend zumindest eine Ausströmöffnung und eine Luftfördervorrichtung, wobei durch die Luftfördervorrichtung der Luftstrom durch die zumindest eine Ausströmöffnung in Richtung einer Innenseite der Frontscheibe des Fahrzeugs leitbar ist, ist in der DE 10 2016 200 373 A1 beschrieben.

Die DE 10 2008 034 167 A1 offenbart eine Klimaanlage für Fahrzeuge mit einer Klimatisierungseinheit zur Erzeugung klimatisierter Luft. Die WO 2007/019908 A1 zeigt eine Instrumententafelanordnung für den Innenraum eines Kraftfahrzeugs.

Ähnliche Innenraumeinrichtungen gehen auch aus den Druckschriften DE 19 09 519 U, DE 101 52 480 A1, JP S58 174049 A, EP 1 288 033 A2 und DE 10 2011 000 924 A1 hervor.

Der Erfindung liegt die Aufgabe zugrunde, eine verbesserte Innenraumeinrichtung für ein Kraftfahrzeug zu schaffen, die eine vorteilhafte Belüftung oder Klimatisierung des Innenraums des Kraftfahrzeugs mittels einer kostengünstig realisierbaren Ausströmeranordnung gewährleistet.

Die der Erfindung zugrundeliegende Aufgabe wird durch eine Innenraumeinrichtung mit den Merkmalen des Anspruchs 1 gelöst. Dabei ist vorgesehen, dass der erste Ausströmer mindestens ein mittels eines von einem Benutzer betätigbaren Stellelements mechanisch verstellbares Luftleitelement aufweist, und dass die Ausströmeranordnung wenigstens einen zweiten Ausströmer umfasst, der an einer dem Fahrzeuginnenraum zugewandten Frontseite des Armaturenbretts angeordnet ist, wobei der zweite Ausströmer stellelementfrei ausgebildet ist, sodass es dem Benutzer nicht möglich ist, die Ausströmung manuell zu beeinflussen, und sich zumindest bereichsweise entlang des Armaturenbretts unterhalb der Instrumententafel erstreckt.

Die erfindungsgemäße Innenraumeinrichtung hat den Vorteil, dass eine vorteilhafte Belüftung und/oder Klimatisierung des Innenraums sowie eine einfache Bedienung der Ausströmeranordnung gewährleistet ist. Erfindungsgemäß ist hierzu vorgesehen, dass der zweite Ausströmer stellelementfrei ausgebildet ist und sich zumindest bereichsweise entlang des Armaturenbretts unterhalb der Instrumententafel erstreckt. Damit liegt der zweite Ausströmer unterhalb der Instrumententafel und wird durch diese weder verdeckt noch beeinträchtigt. Weil sich der zweite Ausströmer bereichsweise entlang des Armaturenbretts erstreckt, ist ein großer Ausströmquerschnitt möglich, der niedrige Strömungsgeschwindigkeiten der Ausströmung und damit ein komfortables Belüften und/oder Klimatisieren des Innenraums und der darin befindlichen Personen ermöglicht. Durch die stellelementfreie Ausbildung ist es dem Benutzer nicht möglich, die Ausströmrichtung manuell zu beeinflussen. Stattdessen ist der zweite Ausströmer insbesondere für eine optimale konstante Ausströmrichtung ausgebildet. Gemäß einer bevorzugten Weiterbildung der Erfindung erstreckt sich der zweite Ausströmer zumindest im Wesentlichen über die gesamte Länge des Armaturenbretts. Dadurch erstreckt sich der zweite Ausströmer beispielsweise von der Fahrerseite bis zur Beifahrerseite unterhalb der Instrumententafel, sodass eine vorteilhafte Ausströmung über die gesamte oder nahezu die gesamte Länge des Armaturenbretts gewährleistet ist.

Weiterhin ist bevorzugt vorgesehen, dass mehrere erste und/oder zweite Ausströmer in Längserstreckung des Armaturenbretts hintereinander und beabstandet zueinander angeordnet sind. Die Ausströmer erstrecken sich dabei jeweils entlang des Armaturenbretts, also in Längserstreckung des Armaturenbretts, sodass jeder Ausströmer für sich eine vorteilhafte Ausströmung gewährleistet.

Bevorzugt ist der jeweilige zweite Ausströmer als Schlitzausströmer ausgebildet. Dadurch ist der Querschnitt des jeweiligen zweiten Ausströmers mit einer geringen Höhe und einer zum Vergleich der Höhe großen Länge ausgebildet, wodurch eine vorteilhafte Bauraumausnutzung an dem Armaturenbrett erreicht wird, bei gleichzeitig vorteilhafter Belüftung und/oder Klimatisierung des Fahrzeuginnenraums. Der zweite Ausströmer weist bevorzugt zumindest ein feststehendes und/oder verstecktes Luftleitelement auf, das die Ausströmung vorteilhaft in den Fahrzeuginnenraum lenkt.

Gemäß einer bevorzugten Weiterbildung der Erfindung erstreckt sich ein Ausströmschlitz des Schlitzausströmers parallel zur Längserstreckung des Armaturenbretts. Damit ist der Schlitzausströmer in Längsrichtung des Armaturenbretts ausgerichtet und erlaubt über eine weite Länge des Armaturenbretts eine vorteilhafte Ausströmung, wie vorstehend bereits erwähnt.

Gemäß einer bevorzugten Weiterbildung sind mehrere erste Ausströmer an der Oberseite des Armaturenbretts angeordnet. Durch die mehreren Ausströmer kann insbesondere eine Ausströmung von Frischluft und/oder klimatisierter Luft in den Innenraum in unterschiedliche Richtungen erfolgen, um beispielsweise einerseits die Windschutzscheibe selbst mit einem Luftstrom zu beaufschlagen, insbesondere um ein Enteisen oder ein Auflösen eines Beschlags zu beschleunigen, und andererseits einen Luftstrom in Richtung des Fahrzeuginnenraums, insbesondere in Richtung des Kopfbereichs der Insassen im Fahrzeuginnenraum, zu lenken. Besonders bevorzugt weist zumindest ein zweiter Ausströmer ein verstellbares Luftleitelement auf, welchem ein elektrisch ansteuerbarer Aktuator zum Verstellen zugeordnet ist. Damit ist die Ausströmung des zweiten Ausströmers bezüglich ihrer Ausströmrichtung beeinflussbar. So erfolgt insbesondere durch den Aktuator eine automatisierte Verstellung des Luftleitelements, beispielsweise in Abhängigkeit von einer vorherrschenden Lufttemperatur im Fahrzeuginnenraum.

Erfindungsgemäß ist die Instrumententafel an dem Armaturenbrett verstellbar gelagert. Dadurch ist die Instrumententafel beispielsweise von der Fahrerseite zur Beifahrerseite oder in eine mittige Position verstellbar, wodurch die Flexibilität des Fahrzeuginnenraums erhöht wird. Dies ist insbesondere von Vorteil, wenn die Innenraumeinrichtung bei einem Kraftfahrzeug eingesetzt wird, das dazu ausgebildet ist, einen autonomen Fahrbetrieb auszuführen.

Die Instrumententafel ist dazu an dem Armaturenbrett erfindungsgemäß in Längsrichtung des Armaturenbretts verschiebbar gelagert. Dadurch ist die Instrumententafel beispielsweise von der Fahrerseite zu der Beifahrerseite, wie bereits erwähnt, verschiebbar. Weil der zweite Ausströmer unterhalb der Instrumententafel angeordnet ist, wird er unabhängig von der Stellung der Instrumententafel nicht von dieser verdeckt, so dass stets eine vorteilhafte Belüftung und/oder Klimatisierung des Innenraums unabhängig von der Position der verschiebbaren Instrumententafel gewährleistet ist.

Das erfindungsgemäße Kraftfahrzeug mit den Merkmalen des Anspruchs 9 zeichnet sich durch die erfindungsgemäße Innenraumeinrichtung aus. Es ergeben sich hierdurch die bereits genannten Vorteile. Insbesondere ist das Kraftfahrzeug als autonom fahrendes Kraftfahrzeug ausgebildet, das in einem autonomen Fahrbetrieb selbstständig die Steuerung des Kraftfahrzeugs in Abhängigkeit von einem Fahrziel zum Erreichen des Fahrziels übernimmt. Insbesondere in diesem Fall ist es von Vorteil, wenn die Instrumententafel verschiebbar an dem Armaturenbrett gelagert ist, um eine hohe Flexibilität der Innenraumeinrichtung für die Insassen des Kraftfahrzeugs zu ermöglichen, wie vorstehend bereits erwähnt.

Im Folgenden soll die Erfindung anhand der Zeichnung näher erläutert werden. Dazu zeigen
- Figur 1: den Innenraum eines Kraftfahrzeugs gemäß einem Ausführungsbeispiel in einer vereinfachten Darstellung, und
- Figuren 2A bis 2C: ein weiteres Ausführungsbeispiel des Innenraums in unterschiedlichen Darstellungen.

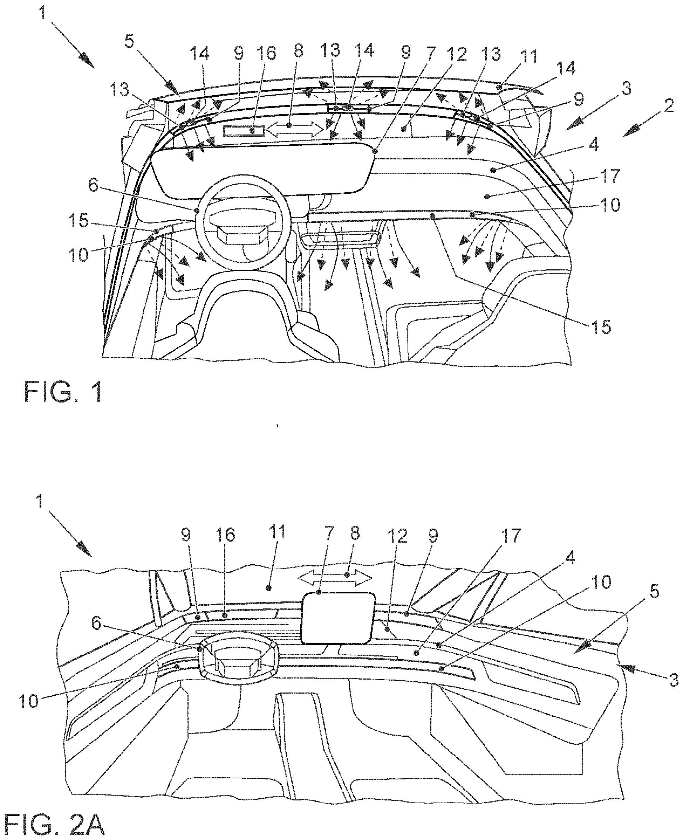

Figur 1 zeigt in einer vereinfachten Darstellung ein Kraftfahrzeug 1 mit Blick in den Fahrzeuginnenraum 2 in Richtung eines vorderen Endes des Innenraums 2. Dort ist im Innenraum 2 eine Innenraumeinrichtung 3 angeordnet, die ein Armaturenbrett 4, das sich in seiner Längserstreckung über die gesamte Breite des Fahrzeuginnenraums 2 erstreckt, eine in dem Armaturenbrett 4 ausgebildete Ausströmeranordnung 5, ein Lenkrad 6 sowie eine Instrumententafel 7 umfasst. Zumindest die Instrumententafel 7 ist entlang der Länge des Armaturenbretts, wie durch einen Doppelpfeil 8 angezeigt, verschiebbar an dem Armaturenbrett 4 gelagert. Dadurch ist die Instrumententafel 7 beispielsweise von der in Figur 1 gezeigten Position auf der Fahrerseite in eine Position verschiebbar, in welcher die Instrumententafel 7 dem Beifahrer gegenüberliegt oder mittig an dem Armaturenbrett 4 angeordnet ist, um beispielsweise als Bildschirm für alle Insassen des Fahrzeugs zu dienen. Das Kraftfahrzeug 1 ist als autonom fahrbares Kraftfahrzeug ausgebildet, sodass der Benutzer im Betrieb die Instrumententafel 7 beispielsweise in eine komfortable Position für alle Insassen verschiebt, um auf der Instrumententafel 7 beispielsweise anstelle der Fahrdaten einen Film oder dergleichen zu zeigen. Optional ist auch das Lenkrad 6 entlang des Armaturenbretts 4 verschiebbar gelagert.

Die Ausströmeranordnung 5 weist mehrere erste Ausströmer 9 und zumindest einen zweiten Ausströmer 10 auf. Die Ausströmer 9 und 10 sind mit einer oder mehreren Fördereinrichtungen zum Bereitstellen eines Luftstroms, insbesondere eines klimatisierten Luftstroms, strömungstechnisch verbunden.

Die ersten Ausströmer 9 sind über die Länge des Armaturenbretts 4 verteilt an dessen einer Windschutzscheibe 11 zugeordneten Oberseite 12 des Armaturenbretts 4 angeordnet. Die ersten Ausströmer 9 weisen jeweils zumindest ein verstellbares Luftleitelement 13 auf, mittels dessen die Ausströmrichtung des jeweiligen ersten Ausströmers 9 einstellbar ist. Optional weisen die ersten Ausströmer 9 jeweils mehrere verstellbare Luftleitelemente 13 auf. Vorzugsweise weist außerdem jeder der ersten Ausströmer 9 zumindest ein von einem Benutzer manuell betätigbares Stellelement 14 auf, mittels dessen jeweils ein Luftleitelement 13 des jeweiligen ersten Ausströmers 9 in seine Ausrichtung verstellbar ist, um die Ausströmrichtung zu beeinflussen. Dazu sind die Stellelemente 14 mit dem jeweiligen Luftleitelement 13 mechanisch gekoppelt. Wie durch Pfeile in Figur 1 gezeigt, kann der Benutzer somit den Luftstrom beispielsweise auf die Windschutzscheibe 11 richten, um einen Abtauvorgang zu beschleunigen, oder um Beschlag zu entfernen, oder in Richtung des Fahrzeuginnenraums lenken.

Der zweite Ausströmer 10 ist bevorzugt als Schlitzausströmer 15 ausgebildet, der sich über die gesamte Breite des Armaturenbretts 4 unterhalb der Instrumententafel 7 erstreckt. Dadurch erfolgt die Ausströmung durch den zweiten Ausströmer 10 stets unterhalb der Instrumententafel 7 unabhängig von deren Schiebeposition an dem Armaturenbrett 4. Der Schlitzausströmer 15 weist bevorzugt kein oder ein oder mehrere feststehende Luftleitelemente (in Figur 1 nicht gezeigt) auf, durch welche der Luftstrom in den Fahrzeuginnenraum gelenkt wird. Optional ist zumindest eines der Luftleitelemente elektromotorisch durch einen hier nicht näher dargestellten Aktuator verstellbar, um die Luftströmungsrichtung aus dem zweiten Ausströmer 10 zu beeinflussen.

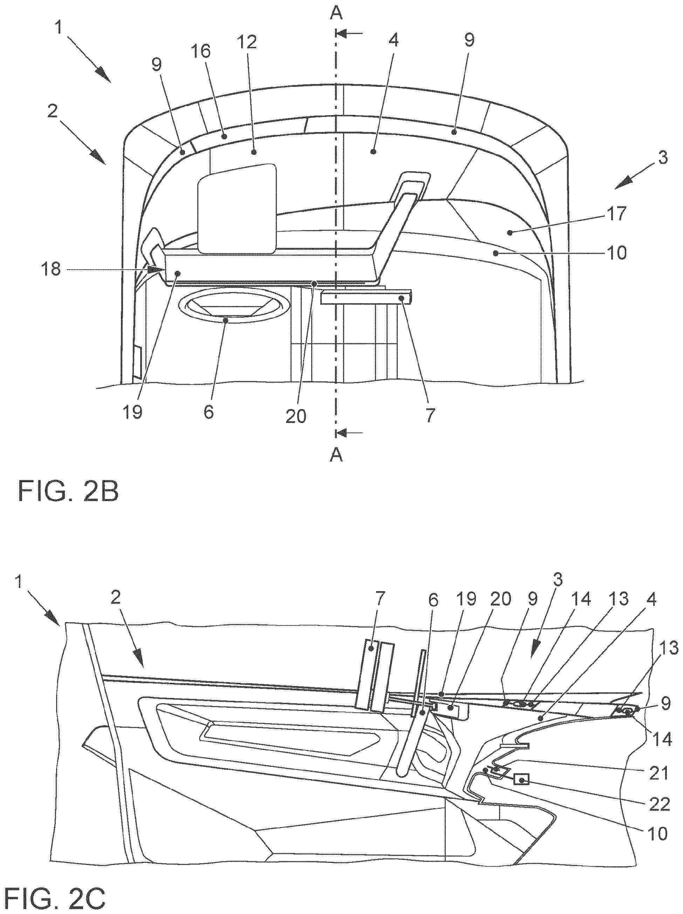

Figuren 2A, 2B und 2C zeigen ein weiteres Ausführungsbeispiel des vorteilhaften Kraftfahrzeugs, wobei aus Figur 1 bereits bekannte Elemente mit den gleichen Bezugszeichen versehen sind und insofern auf die obenstehende Beschreibung verwiesen wird. Im Folgenden soll im Wesentlichen auf die Unterschiede eingegangen werden.

Figur 2A zeigt hierzu eine Draufsicht auf das Armaturenbrett 4 im Innenraum des Kraftfahrzeugs 1. Im Unterschied zu dem vorhergehenden Ausführungsbeispiel ist die Instrumententafel 7 schmaler ausgebildet, aber auch gemäß Doppelpfeil 8 in dem Fahrzeuginnenraum entlang des Armaturenbretts 4 verschiebbar. Im Unterschied zu dem vorhergehenden Ausführungsbeispiel ist nur ein erster Ausströmer 9 an der Oberseite 12 des Armaturenbretts 4 vorhanden, der optional lediglich von einem Head-Up-Display 16 unterbrochen ist. In diesem Fall sind sowohl der erste Ausströmer 9 als auch der zweite Ausströmer 10 als Ausströmerband ausgebildet, das sich jeweils zumindest im Wesentlichen über die Länge des Armaturenbretts 4 erstreckt.

Figur 2B zeigt eine Draufsicht auf das Armaturenbrett 4. Dabei ist ersichtlich, dass der erste Ausströmer 9 aus Sicht der Insassen des Kraftfahrzeugs 1 zurückversetzt zu dem zweiten Ausströmer 10 liegt. Während der zweite Ausströmer 10 an der Frontseite 17 des Armaturenbretts 4 liegt, liegt der Ausströmer 9, wie bereits erwähnt, an der Oberseite 12. Optional sind die Ausströmer 9, 10 dabei jeweils geneigt ausgerichtet, sodass sie in einer Ebene liegen, die im Wesentlichen vertikal ausgerichtet ist.

Eine Lagereinrichtung 18 für die Instrumententafel 7 weist dabei einen Lagerarm 19 auf, der an dem Armaturenbrett 4 in dem Bereich zwischen den Ausströmern 9 und 10 auf der Oberseite 12 gehalten ist und sich in den Fahrzeuginnenraum erstreckt. Der Lagerarm 19 weist eine Führungsschiene 20 auf, an welcher die Instrumententafel 7 verschiebbar gelagert ist.

Figur 2C zeigt eine vereinfachte Schnittdarstellung des Kraftfahrzeugs 1 entlang der Linie A-A aus Figur 2B. Hierbei ist ersichtlich, dass die Ausströmer 9, 10 auf unterschiedlichen Höhen des Armaturenbretts 4 angeordnet sind. Der Ausströmer 10 ist dabei als Schlitzausströmer ausgebildet, weist also kein verstellbares Luftleitelement auf. Der Ausströmer 9 weist wenigstens ein verstellbares Luftleitelement 13, wie zuvor bereits beschrieben, auf.

Der erste Ausströmer 9 bildet somit eine obere Klimatisierungsebene. Durch den Ausströmer 9 ist eine indirekte Belüftung des Innenraums sowie eine direkte Belüftung der Windschutzscheibe 11 möglich. Durch eine vorteilhafte Teilung, insbesondere Dreiteilung, des Ausströmers 9, sodass mehrere Ausströmer, insbesondere drei Ausströmer 9, vorhanden sind, wird eine vorteilhafte Integration der oberen Klimatisierungsebene in das Armaturenbrett bei Vorhandensein des Head-Up-Displays 16 ermöglicht.

Der Ausströmer 10 bildet eine untere Klimatisierungsebene für den Fahrzeuginnenraum 2, durch welchen eine Anströmung der Fahrzeuginsassen im Oberkörperbereich und der Beine gewährleistet ist. Vorzugsweise weist der Ausströmer 10 keine sichtbaren Richtelemente/Luftleitelemente auf. Insbesondere ist der Ausströmer 10 in eine Dekorleiste oder in eine Schattenfuge des Armaturenbretts 4 integriert, sodass er für den Benutzer optisch nicht oder kaum wahrnehmbar ist.

Optional weist der zweite Ausströmer 10 eine oder mehrere versteckt angeordnete Luftleitelemente 21 auf, die durch einen Aktuator 22 verstellbar sind, um die Ausströmrichtung zu beeinflussen. Während die Strömungsrichtung der Ausströmer 9 somit vom Benutzer selbst mechanisch einstellbar ist, ist der zweite Ausströmer 10 derart ausgebildet, dass der Luftstrom entweder eine konstante Strömungsrichtung aufweist oder durch ein elektromotorisch verstellbares Luftleitelement 21 beeinflussbar ist.

### Bezugszeichenliste

- 1: Kraftfahrzeug
- 2: Fahrzeuginnenraum
- 3: Innenraumeinrichtung
- 4: Armaturenbrett
- 5: Ausströmeranordnung
- 6: Lenkrad
- 7: Instrumententafel
- 8: Doppelpfeil
- 9: Ausströmer
- 10: Ausströmer
- 11: Windschutzscheibe
- 12: Oberseite
- 13: Luftleitelement
- 14: Stellelement
- 15: Schlitzausströmer
- 16: Head-Up-Display
- 17: Frontseite
- 18: Lagereinrichtung
- 19: Lagerarm
- 20: Führungsschiene
- 21: Luftleitelement
- 22: Aktuator

## Patentansprüche

1. Innenraumeinrichtung (3) für ein Kraftfahrzeug (1), mit einem einer Windschutzscheibe (11) zuordenbaren Armaturenbrett (4), an welchem zumindest eine Instrumententafel (7) angeordnet ist, und mit einer Ausströmeranordnung (5), die wenigstens einen ersten Ausströmer (9), der an einer der Windschutzscheibe (11) zuordenbaren Oberseite (12) des Armaturenbretts (4) angeordnet ist, umfasst, wobei die Instrumententafel (7) an dem Armaturenbrett (4) verstellbar gelagert ist, wobei die Instrumententafel (7) an dem Armaturenbrett (4) in Längsrichtung des Armaturenbretts (4) verschiebbar gelagert ist, **dadurch gekennzeichnet, dass** der erste Ausströmer (9) mindestens ein mittels eines von einem Benutzer betätigbaren Stellelements (14) mechanisch verstellbares Luftleitelement (13) aufweist, und dass die Ausströmeranordnung (5) wenigstens einen zweiten Ausströmer (10) umfasst, der an einer dem Fahrzeuginnenraum zugewandten Frontseite (17) des Armaturenbretts (4) angeordnet ist, wobei der zweite Ausströmer (10) stellelementfrei ausgebildet ist, sodass es dem Benutzer nicht möglich ist, die Ausströmung manuell zu beeinflussen, und sich zumindest bereichsweise entlang des Armaturenbretts (4) unterhalb der Instrumententafel (7) erstreckt.

2. Innenraumeinrichtung (3) nach dem vorhergehenden Anspruch, **dadurch gekennzeichnet, dass** sich der zweite Ausströmer (10) zumindest im Wesentlichen über die gesamte Länge des Armaturenbretts (4) erstreckt.

3. Innenraumeinrichtung (3) nach einem der vorhergehenden Ansprüche, **dadurch gekennzeichnet, dass** mehrere erste und/oder zweite Ausströmer (10) in Längserstreckung des Armaturenbretts (4) hintereinander und beabstandet zueinander angeordnet sind.

4. Innenraumeinrichtung (3) nach einem der vorhergehenden Ansprüche, **dadurch gekennzeichnet, dass** der jeweilige zweite Ausströmer (10) als Schlitzausströmer ausgebildet ist.

5. Innenraumeinrichtung (3) nach Anspruch 4, **dadurch gekennzeichnet, dass** sich ein Ausströmschlitz des Schlitzausströmers parallel zur Längserstreckung des Armaturenbretts (4) erstreckt.

6. Innenraumeinrichtung (3) nach einem der vorhergehenden Ansprüche, **dadurch gekennzeichnet, dass** mehrere erste Ausströmer (9) an der Oberseite (12) des Armaturenbretts (4) angeordnet sind.

7. Innenraumeinrichtung (3) nach einem der vorhergehenden Ansprüche, **dadurch gekennzeichnet, dass** zumindest ein zweiter Ausströmer (10) ein verstellbares Luftleitelement (21) aufweist, welchem ein elektrisch ansteuerbarer Aktuator zum Verstellen zugeordnet ist.

8. Innenraumeinrichtung (3) nach Anspruch 7, **dadurch gekennzeichnet, dass** das Luftleitelement (21) des zweiten Ausströmers (10) versteckt angeordnet ist.

9. Kraftfahrzeug (1), insbesondere autonom fahrbares Kraftfahrzeug, mit einer Innenraumeinrichtung (3) nach einem der vorhergehenden Ansprüche.

## Claims

1. Interior-compartment device (3) for a motor vehicle (1), having a dashboard (4) which is assignable to a windscreen (11) and on which at least one instrument panel (7) is arranged, and having a vent arrangement (5) which comprises at least one first vent (9) which is arranged on a top side (12), assignable to the windscreen (11), of the dashboard (4), wherein the instrument panel (7) is mounted adjustably on the dashboard (4), wherein the instrument panel (7) is mounted on the dashboard (4) so as to be displaceable in a longitudinal direction of the dashboard (4), **characterized in that** the first vent (9) has at least one air-guiding element (13) which is adjustable mechanically by means of an actuating element (14) which is able to be actuated by a user, and **in that** the vent arrangement (5) comprises at least one second vent (10) which is arranged on a front side (17), facing towards the vehicle interior compartment, of the dashboard (4), wherein the second vent (10) is formed without an actuating element, so that the user is unable to manually influence the outflow, and extends at least regionally along the dashboard (4) below the instrument panel (7).

2. Interior-compartment device (3) according to the preceding claim, **characterized in that** the second vent (10) extends at least substantially over the entire length of the dashboard (4).

3. Interior-compartment device (3) according to the either of the preceding claims, **characterized in that** multiple first vents and/or second vents (10) are arranged one behind the other, and spaced apart from one another, in a longitudinal direction of the dashboard (4) .

4. Interior-compartment device (3) according to the one of the preceding claims, **characterized in that** the respective second vent (10) is designed as a slot-type vent.

5. Interior-compartment device (3) according to Claim 4, **characterized in that** an outflow slot of the slot-type vent extends parallel to the longitudinal extent of the dashboard (4).

6. Interior-compartment device (3) according to the one of the preceding claims, **characterized in that** multiple first vents (9) are arranged on the top side (12) of the dashboard (4).

7. Interior-compartment device (3) according to the one of the preceding claims, **characterized in that** at least one second vent (10) has an adjustable air-guiding element (21) which is assigned an electrically activatable actuator for adjustment.

8. Interior-compartment device (3) according to Claim 7, **characterized in that** the air-guiding element (21) of the second vent (10) is arranged in a concealed manner.

9. Motor vehicle (1), in particular a motor vehicle capable of autonomous driving, having an interior-compartment device (3) according to one of the preceding claims.

## Revendications

1. Dispositif d'habitacle (3) pour un véhicule automobile (1), avec une planche de bord (4) pouvant être associée à un pare-brise (11), sur laquelle est agencé au moins un tableau de bord (7), et avec un agencement de sortie (5) qui comprend au moins une première sortie (9), qui est agencée sur un côté supérieur (12) de la planche de bord (4) pouvant être associé au pare-brise (11), le tableau de bord (7) étant monté de manière réglable sur la planche de bord (4), le tableau de bord (7) étant monté sur la planche de bord (4) de manière à pouvoir coulisser dans la direction longitudinale de la planche de bord (4), **caractérisé en ce que** la première sortie (9) présente au moins un élément de guidage d'air (13) réglable mécaniquement au moyen d'un élément de réglage (14) pouvant être actionné par un utilisateur, et **en ce que** l'agencement de sortie (5) comprend au moins une deuxième sortie (10) qui est agencée sur un côté frontal (17) de la planche de bord (4) tourné vers l'habitacle de véhicule, la deuxième sortie (10) étant réalisée sans élément de réglage, de telle sorte qu'il n'est pas possible à l'utilisateur d'influencer manuellement la sortie, et s'étendant au moins par zones le long de la planche de bord (4) en dessous du tableau de bord (7).

2. Dispositif d'habitacle (3) selon la revendication précédente, **caractérisé en ce que** la deuxième sortie (10) s'étend au moins essentiellement sur toute la longueur de la planche de bord (4).

3. Dispositif d'habitacle (3) selon l'une quelconque des revendications précédentes, **caractérisé en ce que** plusieurs premières et/ou deuxièmes sorties (10) sont agencées les unes derrière les autres et à distance les unes des autres dans la direction longitudinale de la planche de bord (4).

4. Dispositif d'habitacle (3) selon l'une quelconque des revendications précédentes, **caractérisé en ce que** la deuxième sortie (10) respective est réalisée sous forme de sortie à fente.

5. Dispositif d'habitacle (3) selon la revendication 4, **caractérisé en ce qu'**une fente de sortie de la sortie à fente s'étend parallèlement à l'extension longitudinale de la planche de bord (4).

6. Dispositif d'habitacle (3) selon l'une quelconque des revendications précédentes, **caractérisé en ce que** plusieurs premières sorties (9) sont agencées sur le côté supérieur (12) de la planche de bord (4).

7. Dispositif d'habitacle (3) selon l'une quelconque des revendications précédentes, **caractérisé en ce qu'**au moins une deuxième sortie (10) présente un élément de guidage d'air réglable (21), auquel est associé un actionneur à commande électrique pour le réglage.

8. Dispositif d'habitacle (3) selon la revendication 7, **caractérisé en ce que** l'élément de guidage d'air (21) de la deuxième sortie (10) est agencé de manière cachée.

9. Véhicule automobile (1), notamment véhicule automobile à conduite autonome, avec un dispositif d'habitacle (3) selon l'une quelconque des revendications précédentes.
